# EUROPEAN PATENT SPECIFICATION

(11) **EP 3 750 699 B1**
(45) Date of publication and mention of the grant of the patent: **23.10.2024**
(21) Application number: 20180462.2
(22) Date of filing: 30.06.2016
(51) Int. Cl.: B29D 30/02, B29D 30/68, B29D 30/72, B60C 19/08, B60C 11/00, B60C 7/00

(54) **NON-MARKING AND ANTI-STATIC SOLID TIRE**
ANTISTATISCHER UND NICHT-MARKIERENDER REIFEN
PNEU ANTISTATIQUE ET NON MARQUANT

(43) Date of publication of application: 16.12.2020
(62) Divisional of application: 16733093.5
(73) Proprietor: COMPAGNIE GENERALE DES ETABLISSEMENTS MICHELIN, 63000 Clermont-Ferrand (FR)
(72) Inventor: DE WITTE, Tim, 1611 Luxembourgh (LU); D.A. GUNASEKARA, Hapunthanthrige, 1611 Luxembourgh (LU); PRADEEPA, Sumudu, 1611 Luxembourgh (LU); DESILVA, Saseendra, 1611 Luxembourgh (LU); ANDERSON, David, 1611 Luxembourgh (LU); MICHE, Thierry, 1611 Luxembourgh (LU); REICH, Ales, 1611 Luxembourgh (LU); ALBOTA, Adrian, 1611 Luxembourgh (LU); VAN DE WIELE, Hugo, 1611 Luxembourgh (LU)
(74) Representative: Gevers Patents

(56) References cited:
- EP-A1- 1 738 893
- EP-A1- 2 036 704
- EP-A2- 0 787 604
- WO-A1-2011/115564
- DE-A1- 102014 102 133
- DE-C1- 10 154 454
- DE-U- 1 993 828
- US-A- 2 339 546
- US-A1- 2012 205 021

## Description

The present invention relates to a tire.

It is known from the state of the art to produce a tread surface of a solid tire which contacts the floor over which the tire is moving, comprising curable or cured non-marking material to avoid the presence of unwanted tire marks on the floor surface. Tires made of rubber containing carbon black, usually leave black markings when moving over the floor. Such markings are especially undesired in situations where for example high demands on hygiene are imposed, for example areas where food is being processed. It is also known from the state of the art that the marking of the floor can be avoided by replacing part of the traditional mixtures for the tread surface which contain carbon black with, for example, silica based mixtures to obtain a more non-marking material.

A tire having a tread surface made of such a non-marking mixture however presents the disadvantage that the electrical conductivity of the non-marking tread surface is low. Whereas with a tire having a tread surface comprising a carbon black mixture, electrical charges built up to the vehicle could be sufficiently conducted towards the ground, tires of which the tread surface is made of a non-marking mixture can only conduct the electrical charge towards the ground at a higher potential difference between the ground and the vehicle. As a consequence, tires having a tread surface made of a non-marking mixture often show spark discharges, which can be dangerous and are often unwanted, especially in environments containing explosive or inflammable materials.

More in particular EP2036704 discloses an attempt to solve this problem and discloses a method for making a tire for a vehicle wheel comprising electrically conducting means, the tire comprising a tread surface delimited by two opposing tire sidewalls. A first step of the method consists of making a preliminary tire, the uncured tire, comprising a first layer comprising an outer circumferential surface and an inner circumferential surface interconnected by opposing first layer sidewalls. These first layer sidewalls delimit together the first layer which extends in circumferential direction of the tire. The first layer is made of a first material containing a reinforcing filling material. This first material comprises less than 2 pphr (parts per hundred) carbon black, at least 30 pphr of reinforcing filling material and has an electrical resistance above 10¹⁰ Ωcm (Ohm centimetre), due to which it is called a non-conducting material of a non-conducting part of the tire. A second step consists of removing a part of the first layer, using for example a drilling or cutting tool, to create a path which extends at least from an inner circumferential surface of the first layer through the first layer towards an outer circumferential surface of the first layer. The path is subsequently filled under atmospheric pressure with a conducting material, the path-filling material, having an electrical resistance which is smaller than 10¹⁰ Ωcm. Finally, the preliminary tire added with the conducting material becomes a final tire so that the respective first layer sidewalls become part of the respective tire sidewalls and so that a total ground contacting surface of at least 150 mm² (squared millimetre) is created.

The prior art provides a way of creating a conducting path of conducting material through the non-conducting part of the tire, being for example the first layer. EP2036704 provides a method that comprises the making of a path through for example the first layer, up to the inner circumferential surface of the first layer that is in contact with the rim of the wheel. The path is created by removing a part of the non-conducting material for example of the first layer, using a tool such as a knife or drilling tool. However, there is no way of telling with certitude whether the path has entered the conducting part of the tire, without having to take away an excessive amount of material which causes for example material waste and degenerative mechanical properties. Making the conducting path too short to reach the inner circumferential surface of the first layer is detrimental to the functioning of the tire as an anti-static tire because no charge would be able to flow easily through the path. A further concern with the existing methods lies in the fact that there is no disclosed way to ascertain that the path after curing is for example defect free such as for example filled entirely with conducting material, without for example interruption of the pathway by for example non-conducting material or air bubbles hindering the flow of charge through the path.

It is furthermore known in the prior art, such as from patent publication WO2011115564, to provide an anti-static solid tire having a marking and non-conducting tread layer, second layer and third layer of the same material, and having an electrically conductive coating applied along the side walls of the tread layer, the second layer and the third layer.

It is furthermore known in the prior art, such as from patent publication DE10154454, to provide a non-marking anti-static solid tire having a non-marking and non-conducting tread layer, a marking and conducting second and third layer of the same material applied below the tread layer, and a non-marking and non-conducting layer covering the sidewalls of the tread layer, the second layer and the third layer. The non-marking and non-conducting tread layer is occasionally pierced by the underlying marking and conducting second layer such as to provide the anti-static properties of the solid tire.

It is furthermore known in the prior art, such as from patent publication DE1993828, to provide a marking anti-static solid tire having a marking and conducting tread layer, a non-marking and non-conducting second and third layer of the same material applied below the tread layer, and a marking and conducting layer covering the sidewalls of the tread layer, the second layer and the third layer.

There is thus need for a method for producing tires with a non-marking thread surface which are more easily provided with conducting material.

It is an object of the present invention to provide a tire obtained by such method.

The present invention relates to a tire for a vehicle wheel comprising electrically conducting means, the tire comprising a tread surface delimited by two opposing tire sidewalls, comprising a first cylindrical layer of a first material, comprising an outer circumferential surface and an inner circumferential surface, the inner and outer circumferential surface being interconnected by opposing first layer sidewalls and together delimiting the first layer. The tire also comprises a conducting material having an electrical resistance which is smaller than the electrical resistance of the first layer applied from the inner circumferential surface of the first layer towards the outer circumferential surface of the first layer so that the respective first layer sidewalls are part of the respective tire sidewalls and that the conducting material can be electrically connected to the electrically conducting means of the wheel, the conducting material extending from the inner circumferential surface of the first layer to the outer circumferential surface of the first layer.

According to the present invention, the conducting material is applied along at least one of the opposing tire sidewalls. The conducting material is applied on the outer surface of at least one of the opposing tire sidewalls. The operator controlling the tire for example for a regular for example annual control, can now more easily inspect, for example visually, the integrity of the applied conducting material, with respect to for example the presence of cracks on the interface between the conducting material and the first layer material, for example the non-conducting material.

According to embodiments of the present invention, the conducting material is applied along at least one of the opposing first layer sidewalls of the tire. The conducting material is applied on the outer surface of at least one of the opposing first layer sidewalls.

According to embodiments of the present invention, the conducting material is partly enveloped by the first material, when applied along at least one of the tire sidewalls. The material of the first layer, and the conducting material are bound together to form one structural entity.

According to embodiments of the present invention, the conducting material is at least partly covered with a covering material. This covering material for example shelters the conducting material from the exterior environment of the tire.

According to embodiments of the present invention, the conducting material and the adjacent material of the first layer, for example non-conducting material, are at least partly covered with the covering material.

According to embodiments of the present invention, the covering material is applied to the outer surface of at least the conducting material, along the tire sidewall.

According to embodiments of the present invention, the material of the covering material is the same as the conducting material.

According to embodiments of the present invention, the covering material is applied to the outer surface of at least the conducting material, along the outer circumferential surface of the first layer.

According to embodiments of the present invention, the material of the covering material is the same as the material of the first layer. This embodiment provides a tire where the marking material for example the material of the conducting material, is completely shielded from the ground.

According to embodiments of the present invention, the thickness of the covering material is reduced in order to allow a flow of charge between the conducting material and the ground. Even when the covering material applied to the outer circumferential surface of the first layer is the material of the first layer, for example the non-conducting material, for example in order to shield the marking material from the ground, the tire can still be used as an anti-static tire thanks to the reduced thickness of the covering material.

According to embodiments of the present invention, the covering material comprises a hole for example in the centre of the covering surface, in order to allow the conducting material to protrude to the surface and to allow a flow of charge between the conducting material and the ground.

According to embodiments of the present invention, the shape of the covering material is at least semi-oval, rectangular or a simple polygon.

According to embodiments of the present invention, the conducting material is at least partly enveloped by the first material. In some embodiments of the invention the conducting material is entirely enveloped by the first material. The material of the first layer, and the conducting material are bound together to form one structural entity.

According to embodiments of the present invention, the conducting material fills at least one path which extends at least from the inner circumferential surface of the first layer through the first layer towards the outer circumferential surface of the first layer. These conducting paths provide a way for the charge to flow through the material of the first layer, which can be a non-conducting part of the tire.

According to embodiments of the present invention, the paths extend linearly from the inner circumferential surface towards the outer circumferential surface.

According to embodiments of the present invention, the paths extend radially from the inner circumferential surface towards the outer circumferential surface. In this embodiment the distance of the path from the inner circumferential surface towards the outer circumferential surface is minimised, requiring the least amount of conducting material and minimising the resistive path for the charge to flow.

According to embodiments of the present invention, the paths are cylindrical, having different possible cross-sectional shapes such as at least semi-circular, triangular, at least-semi oval, rectangular or a simple polygon. The choice of shape can be adapted by the person skilled in the art depending on the desired configuration.

According to embodiments of the present invention, at least two paths are present along the tire's circumference. The amount of paths can be adapted for example to the discharging needs of the tire.

According to embodiments of the present invention, the paths are evenly distributed along the circumference of the tire, in order to promote for example homogeneity of discharging and mechanical properties of the tire.

According to embodiments of the present invention, the paths on at least one of the sides of axial symmetry of the tire are evenly distributed along the circumference of the tire. The paths are on one axial side or on the two axial sides of the tire, wherein the axial symmetry plane divides the tire in two axial sides.

According to embodiments of the present invention, the paths of one of the sides of axial symmetry of the tire oppose the paths of the other side of axial symmetry of the tire.

According to embodiments of the present invention, the paths of one of the sides of axial symmetry of the tire and the paths of the other side of axial symmetry of the tire are interdigitated. The different embodiments can be adapted to for example the required discharging frequency or other discharging properties.

According to a preferred embodiment, the conducting materials have a total ground contacting surface area of at least 150 mm², in order to provide a sufficient ground contacting area to reduce the resistance to the flow of charge through the conducting material.

According to embodiments of the present invention, the material of the first layer comprises less than 0.5 pphr carbon black. Reducing the amount of carbon black for example reduces the risk of leaving marks on the ground, creating a non-marking tire.

According to embodiments of the present invention, the material of the first layer comprises less than 0.2 pphr carbon black.

According to embodiments of the present invention, the electric resistivity of the material of the first layer is above 10¹⁰ Ωcm. The use of carbon black as a reinforcing material for elastomers is well known in the art. However, since carbon black leaves undesired black marks on the floor, its concentration is to be limited. It is another well-known fact that reducing the amount of carbon black as a reinforcing filling material in the first layer also tends to increase the electric resistivity of the first layer. The electric resistivity of the non-conducting material, for example the first layer material, should be measured according to ISO 2878.

According to embodiments of the present invention, the material of the first layer comprises between 30 pphr and 60 pphr reinforcing material.

According to embodiments of the present invention, the material of the first layer comprises 50 pphr reinforcing material.

According to embodiments of the present invention, the reinforcing filling material comprises a non-marking reinforcing filling material.

According to embodiments of the present invention, the reinforcing filling material comprises silica. Substituting an amount of carbon black as a reinforcing filling material with silica has several advantageous effects, for example reducing the rolling resistance of the tire.

According to embodiments of the present invention, the non-marking reinforcing filling material comprises a white non-marking reinforcing filling material.

According to embodiments of the present invention, the applied conducting material has an elastic modulus comparable to the elastic modulus of the material of the first layer, for example non-conducting material, for example the first layer material, for example in order to optimise load carrying properties.

According to embodiments of the present invention, the applied conducting material has an electric resistivity less than that of the material of the first layer, for example non-conducting material, for example the first layer material. In preference, the electric resistivity of the conducting material is less than 10¹⁰ Ωcm, measured according to the ISO 2878 standard.

According to the present invention, a further cylindrical layer, the second cylindrical layer, of a second material is provided which extends in circumferential direction of the tire and which comprises a second outer circumferential surface, wherein along the second outer circumferential surface the first layer of the first material is provided in such a way that the first inner circumferential surface of the first layer runs along the second outer circumferential surface, the material of the second layer having a smaller electrical resistance than the material of the first layer and wherein the conducting material extends at least up to the second layer. Although the presence of the first layer only will be sufficient for some applications, the tire may comprise more than one layer. Thereby the material used for building the first and second layer may be the same or different. The second material serves a typical function of the tire's design, as known by the person skilled in the art and any material adapted thereto can be used. The material of the second layer can for example comprise relatively soft rubber with good dynamic and resilient properties. The material of the second layer can for example comprise carbon black, since it does not contact the ground and can therefore leave no marks on the floor. The use of carbon black moreover combines good conducting properties with good dynamic and resilient properties. The conductivity of the material of the second layer is however not critical for the invention. When the second material of the second layer is not sufficiently conducting for discharging unwanted electric charges to the ground or when an increased discharge of such charges is desired, the conducting material is extended through the second layer so that the conducting material contacts the electrically conducting means, such as for example the rim.

According to embodiments of the present invention, the second layer may for example comprise a metal plate which is then mounted to the rim and thus to the electrically conducting means of the vehicle. Such a tire is a press-on tire and for example comprises at least one layer of rubber bonded to the metal plate.

According to the present invention, the second layer comprises a second inner circumferential surface on a side of the second layer opposite the second outer circumferential surface, wherein a third cylindrical layer of a third material is applied beneath the second layer in circumferential direction of the tire, the third layer comprising a third outer circumferential surface running along the second inner circumferential surface and wherein the third layer is in electrical connection with the second layer and the electrically conducting means of the wheel. The material of the third layer preferably comprises a hard rubber to ensure a firm mounting to the wheel, more preferably the rim. In case no third layer is present, the material of the third layer could be used for the second layer.

According to the present invention, the paths extends from the third layer, along the first and the second layer up to the outer surface of the first outer circumferential surface so that the conducting material of the path is electrically connected to the third layer. Although the path can fully extend through the third layer to contact the electrically conducting means, it is sufficient for the path to extend up to the third outer circumferential surface if the material of the third layer is sufficiently electrically conducting to conduct unwanted electric charges from the electrically conducting means towards the ground and is in electrical connection with the electrically conducting means of the wheel. Since the material of the third layer does not contact the ground, carbon black may be used as a reinforcing filling material, preferably providing the third layer with a sufficient electrical conductivity to permit conducting unwanted electrical charges to the ground along material of the second layer if it is sufficiently conducting and/or the conducting material of the path.

According to embodiments of the present invention, the third layer may for example comprise a metal plate which is then mounted to the rim and thus to the electrically conducting means of the vehicle. Such a tire is a press-on tire and for example comprises at least one layer of rubber bonded to the metal plate.

According to the present invention, the first layer is provided for contacting the ground. It is through this contact that the electric charge will be discharged.

According to the present invention, the conducting means is electrically interconnected with the ground.

According to embodiments of the present invention, a tread pattern is applied on the outer surface of the first layer. The tread pattern influences the behaviour of the tire, for example with respect to water evacuation or noise production.

According to the present invention, a method is provided for producing a tire wherein the tire is a solid tire.

According to embodiments of the present invention, a vehicle wheel is provided which comprises a tire according to the present invention and conducting means, for example a rim, the conducting material of the tire being electrically connected to the electrically conducting means of the wheel.
Figure 1 shows a cross section of a tire according to the invention having tree layers mounted to a rim.
Figures 2a, 2b and 2c show embodiments of the invention in a radial view wherein the conducting material has a semi-circular cross-sectional shape.
Figure 2d shows the embodiment of figure 2c in a circumferential view.
Figures 3a, 3b and 3c shows embodiments of the invention in a radial view wherein the conducting material has a semi-oval cross-sectional shape.
Figure 3d shows the embodiment of figure 3c in a circumferential view.
Figures 4a, 4b and 4c show embodiments of the invention in a radial view wherein the conducting material has a triangular cross-sectional shape.
Figure 4d shows the embodiment of figure 4c in a circumferential view.
Figures 5a, 5b and 5c show embodiments of the invention in a radial view wherein the conducting material has a rectangular cross-sectional shape.
Figure 5d shows the embodiment of figure 5c in a circumferential view.
Figures 6a, 6b and 6c show embodiments of the invention in a radial view wherein according to the present method a non-conducting covering material has been added to at least the conducting material along the tire sidewall in order to obtain the tire as shown.
Figure 6d shows the embodiment of figure 6c in a circumferential view.
Figures 7a, 7b and 7c show embodiments of the invention in a radial view wherein the covering material as shown in the embodiments of figures 6 has been added to the conducting material along the tire sidewall in order to obtain the tire as shown.
Figure 7d shows the embodiment of figure 7c in a circumferential view.
Figures 8a, 8b and 8c show embodiments of the invention in a radial view wherein a conducting covering material has been applied to at least the conducting material along the tire sidewall.
Figure 8d shows the embodiment of figure 8c in a circumferential view.
Figures 9a, 9b and 9c show embodiments of the invention in a radial view wherein the conducting covering material has been applied as well on the tire sidewall, as to the outer circumferential surface of the first layer.
Figure 9d shows the embodiment of figure 9c in a circumferential view.
Figures 10a, 10b and 10c show embodiments of the invention in a radial view wherein a covering material, for example non-conducting material, has been added to the tire sidewalls according to the method of the present invention as shown in the embodiments of figures 6 or 7 and wherein a conducting covering material has been applied on the outer circumferential surface of the first layer.
Figure 10d shows the embodiment of figure 10c in a circumferential view.
Figures 11a, 11b and 11c show embodiments of the invention in a radial view wherein the covering material applied to the outer circumferential surface according to the embodiments in figure 10, is for example a non-conducting material.
Figure 11d shows the embodiment of figure 11c in a circumferential view comprising first and second layers.
Figures 12a, 12b and 12c show embodiments of the invention in a radial view wherein the covering material applied along the outer circumferential surface of the first layer according to the embodiments of figure 10, is circular shaped.
Figure 12d shows the embodiment of figure 12c in a circumferential view.
Figures 13a, 13b and 13c show embodiments of the invention in a radial view wherein the covering material applied along the outer circumferential surface of the first layer according to the embodiments of figure 11, is circular shaped.
Figure 13d shows the embodiment of figure 13c in a circumferential view.
Figures 14a, 14b and 14c show embodiments of the invention in a radial view wherein the covering material applied along the outer circumferential surface of the first layer according to the embodiments of figure 13, is provided with a hole.
Figure 14d shows the embodiment of figure 14c in a circumferential view comprising first and second layers.
Figures 15a, 15b and 15c show embodiments of the invention in a radial view wherein the conducting material is applied along the tire surface, throughout the first layer.
Figure 15d shows the embodiment of figure 15c in a circumferential view.
Figures 16 to 18 show different embodiments of the invention in an axial view on the tire comprising first and second layers.

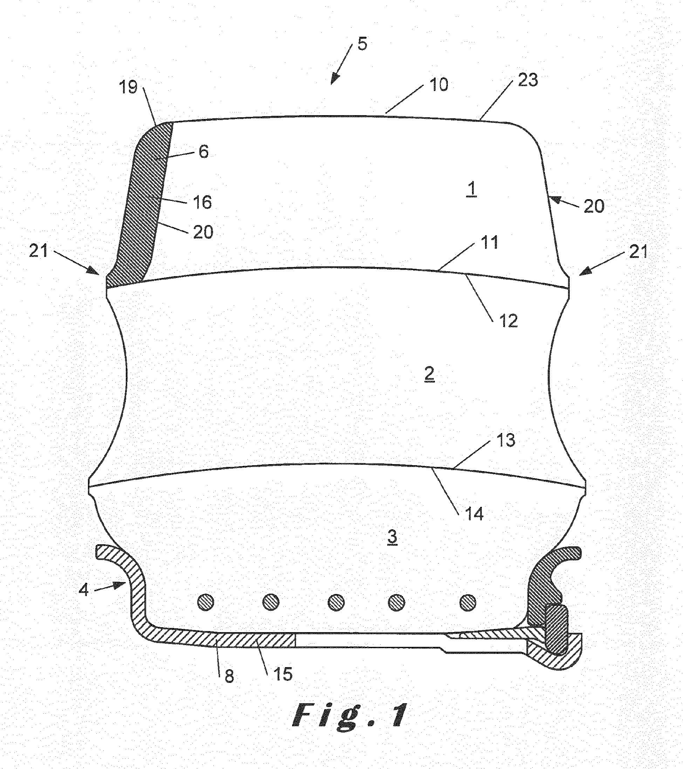

The present invention relates to a tire 5 for a wheel 4 for a vehicle comprising electrical conducting means 15, as shown in figure 1. The wheel 4 is suitable for use with any vehicle known to the person skilled in the art, such as for example fork lift trucks, especially when the tire is a solid tire.

A method for making the tire 5 for a vehicle wheel 4, comprising electrically conducting means 15, the tire 5 comprising a tread surface 23 delimited by two opposing tire sidewalls 21 comprises the consecutive steps of:
- making a preliminary tire comprising a first layer 1 which extends in circumferential direction of the tire. The first layer 1 comprises an outer circumferential surface 10 and an inner circumferential surface 11 interconnected by opposing first layer sidewalls 20 together delimiting the first layer 1. The first layer is made of a first material containing a reinforcing filling material.
- adding a conducting material 16 which has an electrical resistance which is smaller than the electrical resistance of the first layer 1. The conducting material is added along the tire sidewall 21 from the inner circumferential surface 11 of the first layer 1 towards the outer circumferential surface 10 of the first layer 1, so that the conducting material 16 can be electrically connected to the electrically conducting means 15 of the wheel 4 and so that the respective first layer sidewalls 20 become part of the respective tire sidewalls 21.
The first material for example comprises less than 2 pphr carbon black and at least 30 pphr reinforcing filling material. A length of conducting material 16 is added along for example the first layer sidewall 20 of the tire sidewall 21, for example by cutting away a piece of first layer material, which extends from at least a first inner circumferential surface 11 of the first layer through the first layer 1 up to a first outer circumferential surface 10 of the first layer 1, and by adding the material along the cut first layer sidewall. In the final tire 5 the added conducting material 16 will be at least partly enveloped by the material of the first layer, for example non-conducting material, forming one structural entity. This way the conducting material 16 has a ground contacting surface 19, which is electrically connectable to the electrically conducting means 15 of the wheel 4.

The use of carbon black as a reinforcing filling material for elastomers is well known in the art. However, since carbon black leaves undesired black marks on the floor, sometimes its concentration is for example limited to below 2 pphr and a non-marking reinforcing filling material is used beside the carbon black. As non-marking reinforcing filling material white reinforcing filling materials are used, preferably silica. The use of non-marking reinforcing filling materials and the reduced concentration of conducting carbon black in the tire 5 however may increase the electrical resistance. The electrical resistance of the material of the first layer 1 as described above is for example larger than 10¹⁰ Ωcm. The first material for example comprises less than 0.5 pphr of carbon black, more preferably less than 0.2 pphr carbon black. However, not only non-marking tires have relatively large electrical resistances. It is well know from the state of the art that in order to improve the balance between rolling resistance versus wet traction, tread compositions are made with lower carbon black loadings. Such compositions may cause the tire 5 to have a higher electrical resistance Which may interfere with charge dissipation and result in static charge accumulation. Although the exact composition of the material of the first layer 1 is not critical for the invention, the composition of the material of the first layer 1 preferably is chosen in function of the mechanical properties to be achieved since the first layer 1 will contact the ground.

In order to provide a connexion between the conducting means 15 and the ground, conducting material 16 is added along for example the first layer sidewall 20. A length of uncured conducting material 16 is added along for example the first layer sidewall 20 of the tire sidewall 21, for example by cutting away a piece of first layer material, and by applying the material along the cut first layer sidewall. Removing part of the material of the first layer can be done in any way known to the person skilled in the art. The material can for example be cut away, molten away, burned away, pushed away, etc. The material of the first layer of the preliminary tire, for example non-conducting material, can be an uncured material at the time the material is being removed as well as a cured material. The added conducting material 16 can also be an uncured material or a cured material or an incurable material. Alternatively, the length of conducting material 16 could be applied along for example the first layer sidewall 20 of the tire sidewall 21, without cutting away a piece of first layer material. In this optic the conducting material 16 will enter the material of the preliminary tire, for example the material of the first layer which can be non-conductive, only during the curing process and has the added advantage of wasting less material with respect to the process where part of the material of the first layer, for example non-conducting material, is removed. In both alternatives the conducting material 16 in the finished tire 5 will have formed conducting paths 6. In the alternatives where uncured curable material is used, the material has to be cured in order to obtain the finished tire. When curing must be executed, the paths 6, created before curing for example by cutting away a piece of material from the first layer 1, for example non-conducting material, or created during curing for example where the conducting material 16 is added along the uncut preliminary tire, will have be present after curing. In the final tire the lengths of conducting material 16 applied to the tire 5 are the paths 6 of the tire 5.

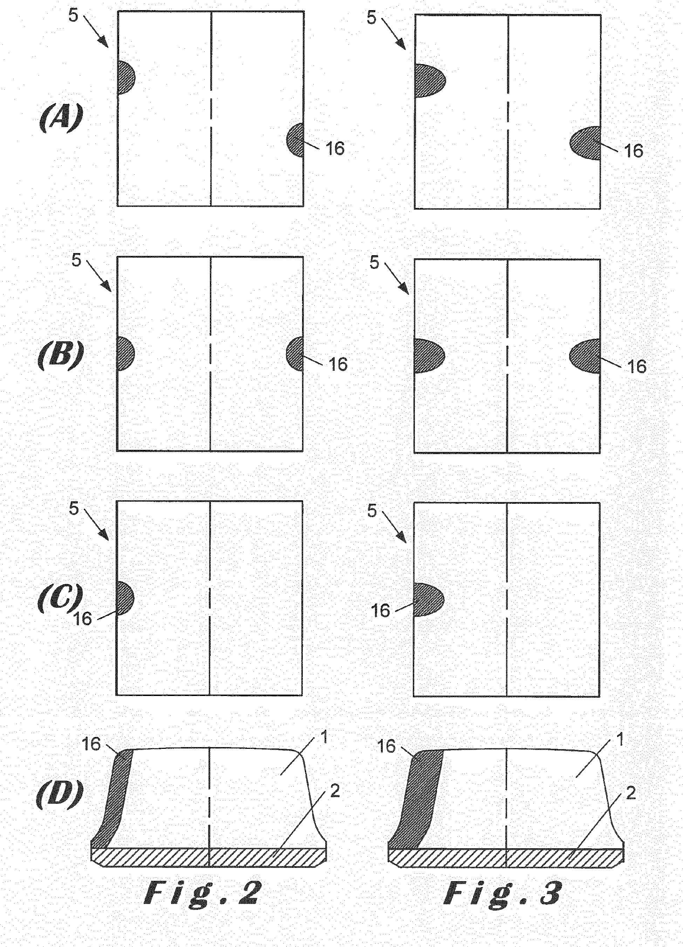

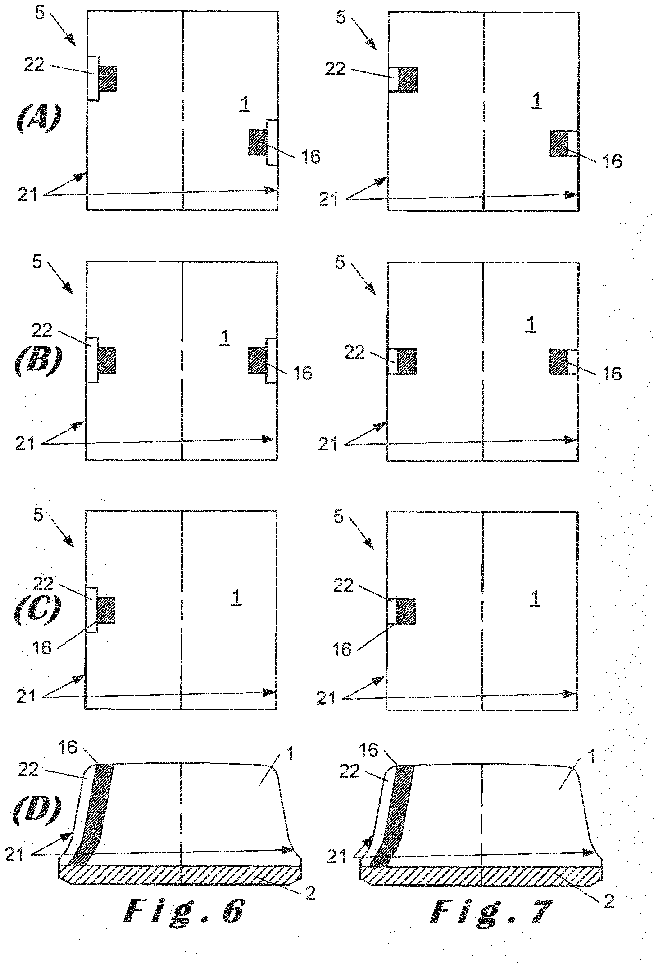

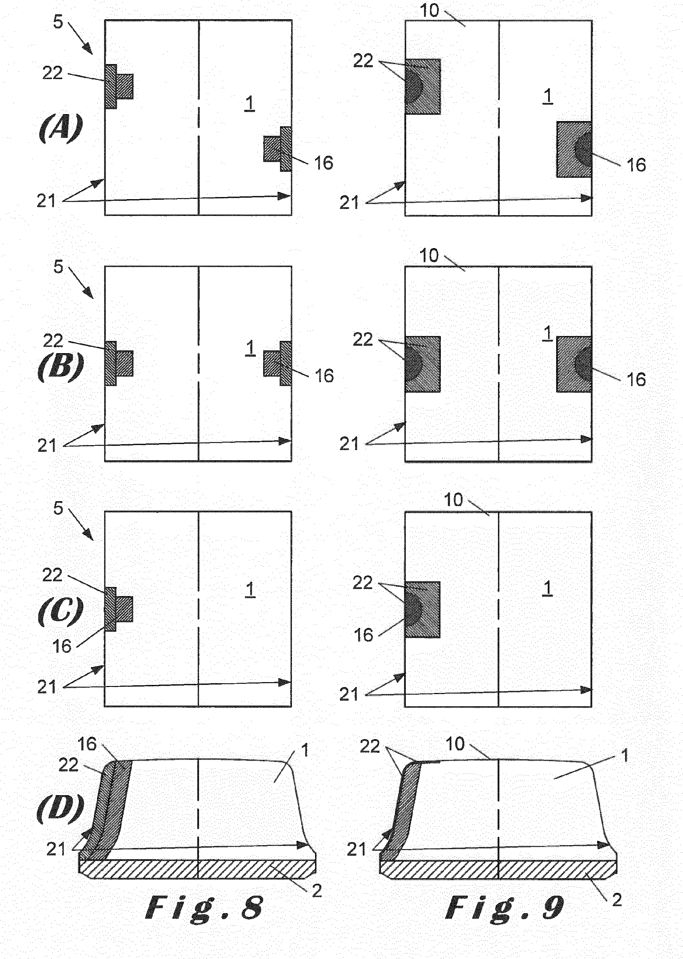

The length of conducting material 16 preferably extends in radial direction of the tire 5, more preferably linearly from the first inner circumferential surface 11 towards the first outer circumferential surface 10. In one exemplary embodiment, a part of the first layer 1 is removed in the form of a straight, preferably radially extending path 6, which extends from the first inner circumferential surface 11 up to the first outer circumferential surface 10. A radially extending linear length of conducting material 16 appears to provide optimum discharge of undesired electrical charges. According to several embodiments of the invention, the cross-sectional shape of the conducting material 16 can be such as circular, triangular, oval, rectangular or a simple polygon. The choice of shape can be adapted by the person skilled in the art depending on the desired configuration. Figures 2 to 5 provide drawings of different possible cross-sectional shapes for the length of conducting material. Figures 2, 3, 4 and 5 disclose respectively cross-sectional shapes circular, oval, triangular and rectangular. In the embodiments of figures 6, 7, 8, 10, 11, 12, 13 and 14, the shape of conducting material is rectangular, whereas the embodiment in figure 9 comprises a semi-circular shape.

The total ground contacting surface 19 of the lengths of conducting material 16 for example has a surface area of at least 150 mm². The presence of a large ground contacting surface area increases the possibility of discharging unwanted electrical charges from the vehicle towards the ground. To limit the risk that marks are left on the floor by the conducting materials 16, the total ground contacting surface 19 has a surface area preferably smaller than 500 mm².

The addition of the conducting material 16 preferably takes place under atmospheric pressure. The conducting material 16 can for example be manually inserted into the path 6 after having removed a piece of material of the first layer, for example non-conducting material. The manual application is however not critical for the invention and the conducting material 16 can for example also be mechanically inserted. The conducting material 16 can be any material deemed appropriate by the person skilled in the art but preferably is chosen in function of the composition of the material of the first layer 1 and the desired mechanical characteristics. It has been found by the inventor that a conducting material with an elastic modulus comparable to that of the material of the first layer, for example non-conducting material, is preferable. Preferably, the conducting material 16 comprises carbon black since carbon black renders the conducting material 16 sufficiently conducting to discharge unwanted electric charges to the ground and offers the conducting material good mechanical properties. The conducting material 16 preferably is provided in the form of a solid body, more preferably a plastic deformable solid body. The composition of the conducting material is however not critical for the invention and can for example be in the form of a paste. The dimensions of the solid body are preferably adapted to the dimensions of the path 6 that must be obtained.

On the outer circumferential layer 10 of the first layer 1 preferably a tread pattern 23 is provided to the tire 5 comprising ribs delimited by grooves. The ground contacting surface 19 of the conducting material 16 preferably is provided on a rib of the tread pattern so that the ground contacting surface 19 can more easily contact the ground.

The resulting tire 5 is then mounted to a rim 8 to form the wheel 4 in such a way that the conducting material 16 contacts the electrical conducting means 15 of the wheel 4, for example the wheel rim 8. Any method known to the person skilled in the art can be used to mount the first layer 1 to the rim 8 of the wheel such as for example clamping the first layer 1 between different parts of the rim 8. The electrical conducting means 15 comprise any electrically conducting means which can be mounted to a vehicle, such as a rim 8 of a wheel parts of the engine, the frame, etc. The conducting material 16 preferably is electrically connected to the electrical conducting means 15 after mounting the tire 5 to the wheel 4 of the vehicle. More preferably, the conducting material 16 is electrically connected to the rim 8 of the wheel after mounting the tire 5 to the rim 8. The conducting material 16 can contact the rim 8 directly or can be electrically connected to the rim 8 by intermediate parts such as for example different layers of the tire 5 conducting the unwanted electrical charges to the ground.

Although the presence of the first layer 1 only will be sufficient for some applications, the tire 5 may comprise more than one layer. Thereby the material used for building the first and second layer may be the same or different. The tire 5 of the present invention in that case is produced by providing a second cylindrical layer 2 which extends in circumferential direction of the tire 5, and thereafter providing on top of this second layer 2 the first layer 1 forming the tread surface 23. The second layer 2 comprises a second outer circumferential surface 12, the inner circumferential surface 11 of the first layer 1 runs along the second outer circumferential surface 12 and the conducting material 16 extends at least up to the second outer surface 12. The second layer 2 can comprise any second material known to the person skilled in the art.

The length of conducting material 16 may fully extend through the first layer 1 and the second layer 2 and may directly contact the electrically conducting means 15. However it may be sufficient for the conducting material 16 to extend up to the second outer circumferential surface 12, if the material of the second layer 2 has an electrical resistance which allows unwanted electric charges to be conducted from the electrically conducting means 15 towards the conducting material 16 along the material of the second layer 2. In such an embodiment, the electrical resistance of the material of the second layer 2 preferably is smaller than the electrical resistance of the material of the first layer 1.

The material of the second layer preferably comprises relatively soft rubber with good dynamic and resilient properties. The material of the second layer 2 can for example comprise carbon black since it does not contact the ground and can therefore leave no marks on the floor. The use of carbon black moreover combines good conducting properties with good dynamic and resilient properties.

The conductivity of the material of the second layer 2 is however not critical for the invention. When the second material of the second layer 2 is not sufficiently conducting for discharging unwanted electric charges to the ground or when an increased discharge of such charges is desired, the conducting material 16 is extended through the second layer 2 and preferably extends up to a second inner circumferential surface 13 with the conducting material 16 preferably extending up to the second inner circumferential surface 13 so that the conducting material contacts the electrically conducting means 15, such as for example the rim 8, when the tire 5 is mounted to the rim 8.

Similarly a third layer 3 can be applied beneath the second layer 2 in circumferential direction of the tire 5, the third layer 3 comprising a third material and a third outer circumferential surface 14 running along the second inner circumferential surface 13.

Although the conducting material 16 can fully extend through the third layer 3 to contact the electrically conducting means 15, it is sufficient for the conducting material 16 to extend up to the third outer circumferential surface 14 if the material of the third layer 3 is sufficiently electrically conducting to conduct unwanted electric charges from the electrically conducting means 15 towards the ground and is in electrical connection with the electrically conducting means 15 of the wheel 4. The material of the third layer 3 preferably comprises a hard rubber to ensure a firm mounting to the wheel 4, more preferably the rim 8. Since the material of the third layer 3 does not contact the ground, carbon black may be used as a reinforcing filling material, preferably providing the third layer 3 with a sufficient electrical conductivity to permit conducting unwanted electrical charges to the ground along material of the second layer 2 and/or the conducting material 16.

The material used to produce the first, second and third layer may be the same or different. Additional layers can still be added beneath the third layer, this is however not critical for the invention and the shape of the additional layer can be determined by the person skilled in the art.

Although the conducting material 16 may extend through all the layers provided beneath the first layer 1 for conducting the unwanted electrical charges from the electrically conducting means 15 up to the ground, the conducting material 16 preferably only extends through the first layer 1 when the material of the underlying layers are sufficiently conducting to discharge the unwanted charges towards the ground. Limiting the length of the conducting material 16 improves the homogeneity of the layered structure of the tire 5, thus improving homogeneous wearing of the tire 5 and improving the homogeneity of the mechanical properties of the tire 5. Decreasing the length of the conducting material 16 also decreases the amount of material that needs to be removed from the layers in certain embodiments, decreasing the time needed to make a tire 5 and decreasing loss of material caused by the removal.

Figures 2 to 15 provide drawings of preferred embodiments of the tire according to different views. Parts a, b and c provide drawings in the radial plane of the tire 5, whereas part d of figures 2 to 15 shows a circumferential cross-section of the first 1 and second layer 2 of the tire 5.

Figures 2 to 5 provide drawings of different possible cross-sectional shapes for the path 6. Figures 2, 3, 4 and 5 disclose respectively cross-sectional shapes circular, oval, triangular and rectangular.

Figure 2a shows a first embodiment of the invention in a radial view wherein the conducting material 16 has a semi-circular cross-sectional shape and is applied on both sides of axial symmetry of the tire 5 in an interdigited configuration.

Figure 2b shows a second embodiment of the invention in a radial view wherein the conducting material 16 has an semi-circular cross-sectional shape and is applied on both sides of axial symmetry of the tire 5 in an opposed configuration.

Figure 2c shows a third embodiment of the invention in a radial view wherein the conducting material 16 has a semi-circular cross-sectional shape and is applied on one side of axial symmetry of the tire 5.

Figure 2d shows the embodiment of figure 2c in a circumferential view comprising first 1 and second layers 2.

Figure 3a shows a fourth embodiment of the invention in a radial view wherein the conducting material 16 has a semi-oval cross-sectional shape and is applied on both sides of the tire 5 in an interdigited configuration.

Figure 3b shows a fifth embodiment of the invention in a radial view wherein the conducting material 16 has a semi-oval cross-sectional shape and is applied on both sides of axial symmetry the tire 5 in an opposed configuration.

Figure 3c shows a sixth embodiment of the invention in a radial view wherein the conducting material 16 has a semi- oval cross-sectional shape and is applied on one side of axial symmetry of the tire 5.

Figure 3d shows the embodiment of figure 3c in a circumferential view comprising first and second layers.

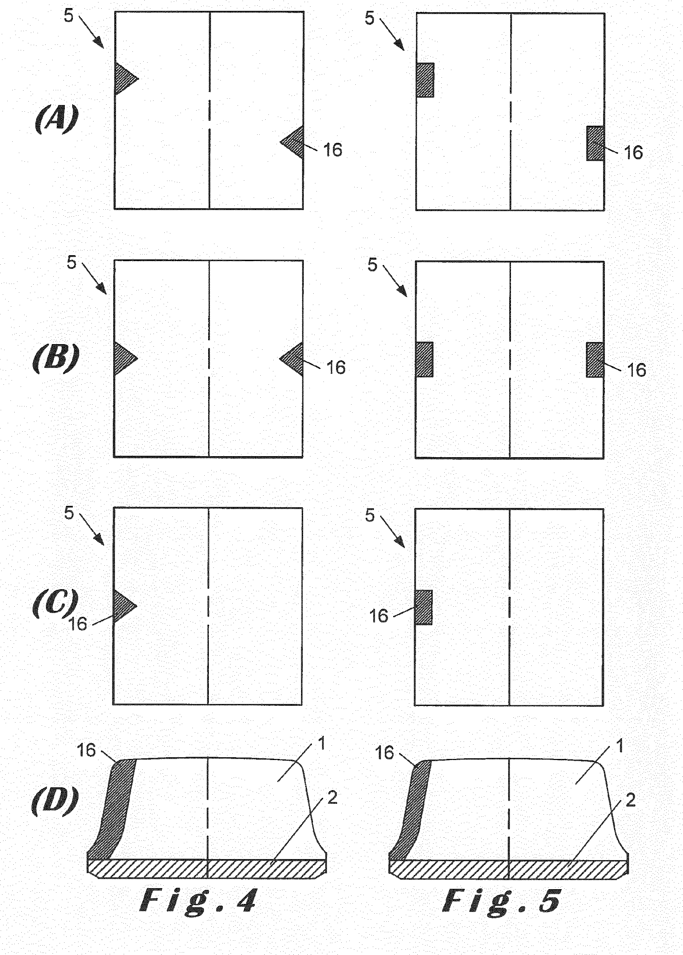

Figure 4a shows a seventh embodiment of the invention in a radial view wherein the conducting material 16 has a triangular cross-sectional shape and is applied on both sides of axial symmetry of the tire 5 in an interdigited configuration.

Figure 4b shows a eighth embodiment of the invention in a radial view wherein the conducting material 16 has a triangular cross-sectional shape and is applied on both sides of axial symmetry of the tire 5 in an opposed configuration.

Figure 4c shows a ninth embodiment of the invention in a radial view wherein the conducting material 16 has a triangular cross-sectional shape and is applied on one side of axial symmetry of the tire 5.

Figure 4d shows the embodiment of figure 4c in a circumferential view comprising first and second layers.

Figure 5a shows a tenth embodiment of the invention in a radial view wherein the conducting material 16 has a rectangular cross-sectional shape and is applied on both sides of axial symmetry of the tire 5 in an interdigited configuration.

Figure 5b shows an eleventh embodiment of the invention in a radial view wherein the conducting material 16 has a rectangular cross-sectional shape and is applied on both sides of axial symmetry of the tire 5 in an opposed configuration.

Figure 5c shows a twelfth embodiment of the invention in a radial view wherein the conducting material 16 has a rectangular cross-sectional shape and is applied on one side of axial symmetry of the tire 5.

Figure 5d shows the embodiment of figure 5c in a circumferential view comprising first and second layers.

Figure 6a shows a thirteenth embodiment of the invention in a radial view wherein the conducting material 16 has a covering material 22, other than the conducting material 16, added to at least the conducting material along the tire sidewall 21, applied to both of the tire sidewalls 21 in an interdigited configuration. In the final tire, the material of the covering material 22, for example non-conducting material, is merged with the first layer material 1 if the same material is used.

Figure 6b shows a fourteenth embodiment of the invention in a radial view wherein the conducting material 16 has a covering material 22, other than the conducting material 16, added to at least the conducting material 16 along the tire sidewall 21, added to both of the tire sidewalls 21 in an opposed configuration. In the final tire, the material of the covering material 22, for example non-conducting material, is merged with the first layer material 1 if the same material is used.

Figure 6c shows a fifteenth embodiment of the invention in a radial view wherein the conducting material 16 has a covering material 22, other than the conducting material 16, added to at least the conducting material 16 along the tire sidewall 21, added to one of the tire sidewalls 21. In the final tire, the material of the covering material 22, for example non-conducting material, is merged with the first layer material 1 if the same material is used.

Figure 6d shows the embodiment of figure 6c in a circumferential view comprising first and second layers.

Figure 7a shows a sixteenth embodiment of the invention in a radial view wherein the conducting material 16 has a covering material 22, other than the conducting material 16, added to the conducting material 16 along the tire sidewall 21, applied to both of the tire sidewalls 21 in an interdigited configuration. In the final tire, the material of the covering material 22, for example non-conducting material, is merged with the first layer material 1 if the same material is used.

Figure 7b shows a seventeenth embodiment of the invention in a radial view wherein the conducting material 16 has a covering material 22, other than the conducting material 16, added to the conducting material 16 along the tire sidewall 21, applied to both of the tire sidewalls 21 in an opposed configuration. In the final tire, the covering material 22, for example non-conducting material, is merged with the first layer material 1 if the same material is used.

Figure 7c shows an eighteenth embodiment of the invention in a radial view wherein the conducting material 16 has a covering material 22, other than the conducting material 16, added to the conducting material 16 along the tire sidewall 21, applied to one of the tire sidewalls 21. In the final tire, the covering material 22, for example the non-conducting material, is merged with the first layer material 1 if the same material is used.

Figure 7d shows the embodiment of figure 7c in a circumferential view comprising first and second layers.

Figure 8a shows a nineteenth embodiment of the invention in a radial view wherein the conducting material 16 has a covering material 22, made out of the conducting material 16, applied to at least the conducting material 16 along the tire sidewall 21, applied to both of the tire sidewalls 21 in an interdigited configuration. In the final tire, the conducting material of the covering material 22 is merged with the conducting material 16 if the same material is used.

Figure 8b shows a twentieth embodiment of the invention in a radial view wherein the conducting material has a covering material 22, made out of the conducting material 16, applied to at least the conducting material 16 along the tire sidewall 21, applied to both of the tire sidewalls 21 in an opposed configuration. In the final tire, the conducting material of the covering material 22 is merged with the conducting material 16 if the same material is used.

Figure 8c shows a twenty first embodiment of the invention in a radial view wherein the conducting material 16 has a covering material 22, made out of the conducting material 16, applied to at least the conducting material 16 along the tire sidewall 21, applied to one of the tire sidewalls 21. In the final tire, the conducting material of the covering material 22 is merged with the conducting material 16 if the same material is used.

Figure 8d shows the embodiment of figure 8c in a circumferential view comprising first and second layers.

Figure 9a shows a twentieth second embodiment of the invention in a radial view wherein the conducting material 16 has a covering material 22, made out of the conducting material 16, applied to at least the conducting material 16 along the tire sidewall 21 and to at least the conducting material 16 along the outer circumferential surface 10 of the first layer 1, applied to both of the tire sidewalls 21 in an interdigited configuration. The shape of the covering material 22 applied on the outer circumferential surface 10 of the first layer 1 is rectangular. In the final tire, the conducting material of the covering material 22 is merged with the conducting material 16 if the same material is used.

Figure 9b shows a twenty third embodiment of the invention in a radial view wherein the conducting material 16 has a covering material 22, made out of the conducting material 16, applied to at least the conducting material 16 along the tire sidewall 21 and to at least the conducting material 16 along the outer circumferential surface 10 of the first layer 1, applied to both of the tire sidewalls 21 in an opposed configuration. The shape of the covering material 22 applied on the outer circumferential surface 10 of the first layer 1 is rectangular. In the final tire, the conducting material of the covering material 22 is merged with the conducting material 16 if the same material is used.

Figure 9c shows a twenty fourth embodiment of the invention in a radial view wherein the conducting material 16 has a covering material 22, made out of the conducting material 16, applied to at least the conducting material 16 along the tire sidewall 21 and to at least the conducting material 16 along the outer circumferential surface 10 of the first layer 1, applied to one of the tire sidewalls 21. The shape of the covering material 22 applied on the outer circumferential surface 10 of the first layer 1 is rectangular. In the final tire, the conducting material of the covering material 22 is merged with the conducting material 16 if the same material is used.

Figure 9d shows the embodiment of figure 9c in a circumferential view comprising first and second layers.

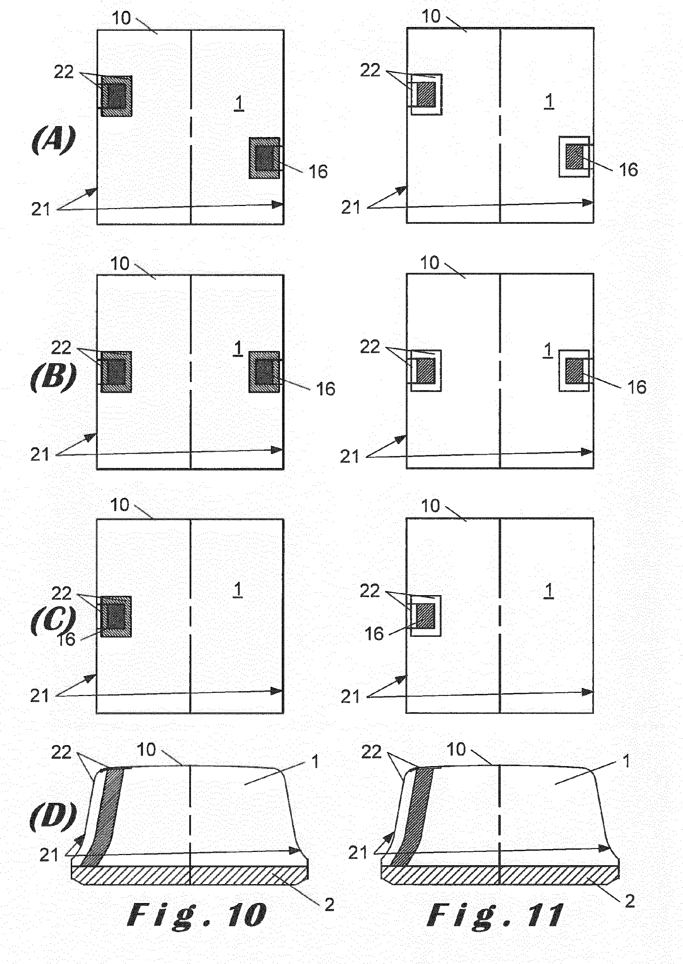

Figure 10a shows a twenty fifth embodiment of the invention in a radial view wherein the conducting material 16 has a first covering material 22, made out of the conducting material 16, applied to at least the conducting material 16 along the outer circumferential surface 10 of the first layer 1, and a second covering material 22, other than the conducting material 16, added according to the method to the conducting material 16 along the tire sidewall 21, applied to both sides of the axial symmetry of the tire 5 in an interdigited configuration. In the final tire 5, the material of the covering material 22, for example non-conducting material, is merged with the first layer material 1 if the same material is used. In the final tire, the conducting material of the covering material 22 is merged with the conducting material 16 if the same material is used. The shape of the covering material 22 applied on the outer circumferential surface 10 of the first layer 1 is rectangular.

Figure 10b shows a twenty sixth embodiment of the invention in a radial view wherein the conducting material 16 has a first covering material 22, made out of the conducting material 16, applied to at least the conducting material 16 along the outer circumferential surface 10 of the first layer 1, and a second covering material 22, other than the conducting material 16, added according to the method to the conducting material 16 along the tire sidewall 21, applied to both sides of the axial symmetry of the tire 5 in an opposed configuration. In the final tire 5, the material, for example non - conductive, of the covering material 22 is merged with the first layer material 1 if the same material is used. In the final tire, the conducting material of the covering material 22 is merged with the conducting material 16 if the same material is used. The shape of the covering material 22 applied on the outer circumferential surface 10 of the first layer 1 is rectangular.

Figure 10c shows a twenty seventh embodiment of the invention in a radial view wherein the conducting material 16 has a first covering material 22, made out of the conducting material 16, applied to at least the conducting material 16 along the outer circumferential surface 10 of the first layer 1, and a second covering material 22, other than the conducting material 16, added according to the method to the conducting material 16 along the tire sidewall 21, applied to one side of the axial symmetry of the tire 5. In the final tire 5, the covering material 22, for example non-conducting material, is merged with the first layer material 1 if the same material is used. In the final tire, the conducting material of the covering material 22 is merged with the conducting material 16 if the same material is used. The shape of the covering material 22 applied on the outer circumferential surface 10 of the first layer 1 is rectangular.

Figure 10d shows the embodiment of figure 10c in a circumferential view comprising first and second layers.

Figure 11a shows a twenty eighth embodiment of the invention in a radial view wherein the conducting material 16 has a first covering material 22, other than the conducting material 16, applied to at least the conducting material 16 along the outer circumferential surface 10 of the first layer 1, and a second covering material 22, other than the conducting material 16, added according to the method to the conducting material 16 along the tire sidewall 21, applied to both sides of axial symmetry of the tire 5 in an interdigited configuration. In this embodiment the thickness of the covering material 22 applied on the outer circumferential surface 10 of the first layer 1 is reduced in order to allow the flow of charge between the conducting material 16 and the ground. In the final tire, the covering material 22, for example non-conductive, is merged with the first layer material 1 if the same material is used. The shape of the covering material 22 applied on the outer circumferential surface 10 of the first layer 1 is rectangular.

Figure 11b shows a twenty ninth embodiment of the invention in a radial view wherein the conducting material 16 has a first covering material 22, other than the conducting material 16, applied to at least the conducting material 16 along the outer circumferential surface 10 of the first layer 1, and a second covering material 22, other than the conducting material 16, added according to the method to the conducting material 16 along the tire sidewall 21, applied to both sides of axial symmetry of the tire 5 in an opposed configuration. In this embodiment the thickness of the covering material 22 applied on the outer circumferential surface 10 of the first layer 1 is reduced in order to allow the flow of charge between the conducting material 16 and the ground. In the final tire 5, the material of the covering material 22, which can be non-conductive, is merged with the first layer material 1 if the same material is used. The shape of the covering material 22 applied on the outer circumferential surface 10 of the first layer 1 is rectangular.

Figure 11c shows a thirtieth embodiment of the invention in a radial view wherein the conducting material 16 has a first covering material 22, other than the conducting material 16, applied to at least the conducting material 16 along the outer circumferential surface 10 of the first layer 1, and a second covering material 22, other than the conducting material 16, added according to the method to the conducting material 16 along the tire sidewall 21, applied to one sides of axial symmetry of the tire 5. In this embodiment the thickness of the covering material 22 applied on the outer circumferential surface 10 of the first layer 1 is reduced in order to allow the flow of charge between the conducting material 16 and the ground. In the final tire 5, the for example non-conducting material of the covering material 22 is merged with the first layer material 1 if the same material is used. The shape of the covering material 22 applied on the outer circumferential surface 10 of the first layer 1 is rectangular.

Figure 11d shows the embodiment of figure 11c in a circumferential view comprising first and second layers.

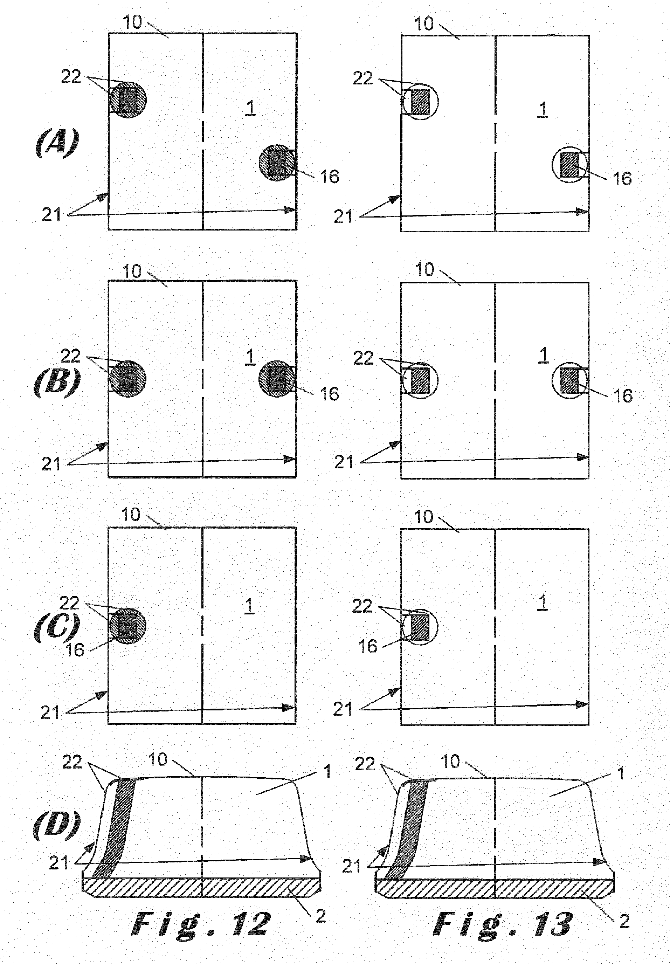

Figure 12a shows a thirty first embodiment of the invention in a radial view wherein the covering material 22 applied along outer circumferential surface 10 of the first layer 1 of the embodiment in figure 10a is provided with a round covering material 22.

Figure 12b shows a thirty second embodiment of the invention in a radial view wherein the covering material 22 applied along outer circumferential surface 10 of the first layer 1 of the embodiment in figure 10b is provided with a round covering material 22.

Figure 12c shows a thirty third embodiment of the invention in a radial view wherein the covering material 22 applied along outer circumferential surface 10 of the first layer 1 of the embodiment in figure 10c is provided with a round covering material 22.

Figure 12d shows the embodiment of figure 12c in a circumferential view comprising first and second layers.

Figure 13a shows a thirty fourth embodiment of the invention in a radial view wherein the covering material 22 applied along outer circumferential surface10 of the first layer 1 of the embodiment in figure 11a is provided with a round covering material 22.

Figure 13b shows a thirty fifth embodiment of the invention in a radial view wherein the covering material 22 applied along outer circumferential surface 10 of the first layer 1 of the embodiment in figure 11b is provided with a round covering material 22.

Figure 13c shows a thirty sixth embodiment of the invention in a radial view wherein the covering material 22 applied along outer circumferential surface 10 of the first layer 1 of the embodiment in figure 11c is provided with a round covering material 22.

Figure 13d shows the embodiment of figure 13c in a circumferential view comprising first and second layers.

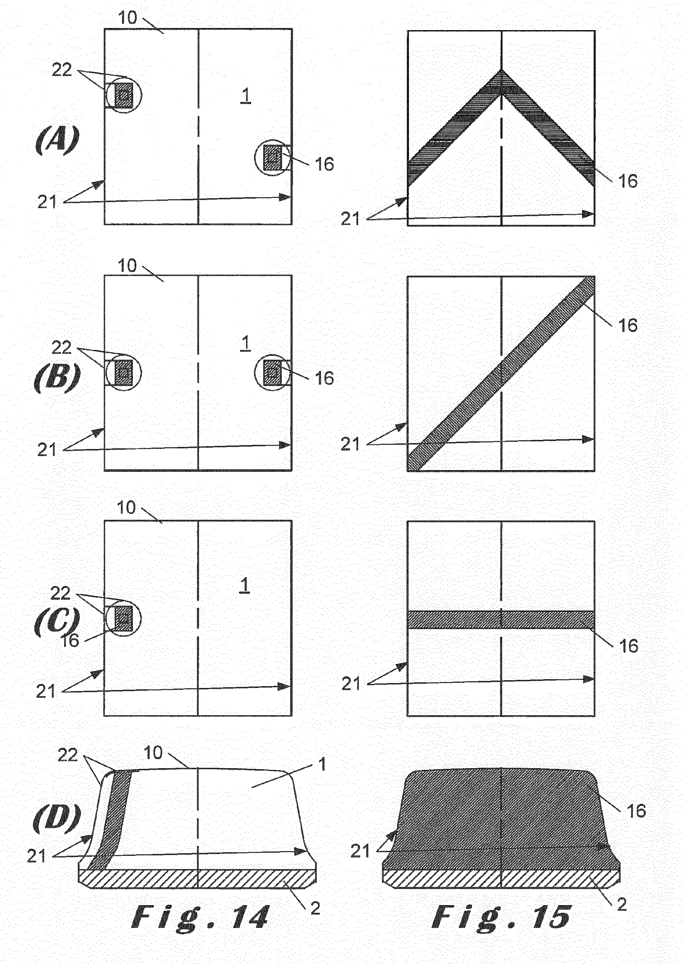

Figure 14a shows a thirty first embodiment of the invention in a radial view wherein the covering material 22 applied along outer circumferential surface 10 of the first layer 1 of the embodiment in figure 13a is provided with a hole which allows the conducting material 16 to protrude to the outer circumferential surface 10 of the first layer 1. In this embodiment in order to allow the flow of charge between the conducting material 16 and the ground a direct connexion between the conducting material 16 and the ground is provided through the hole.

Figure 14b shows a thirty second embodiment of the invention in a radial view wherein the covering material 22 applied along outer circumferential surface 10 of the first layer 1 of the embodiment in figure 13b is provided with a hole which allows the conducting material to protrude to the outer circumferential surface 10 of the first layer 1. In this embodiment in order to allow the flow of charge between the conducting material 16 and the ground a direct connexion between the conducting material 16 and the ground is provided through the hole.

Figure 14c shows a thirty third embodiment of the invention in a radial view wherein the covering material 22 applied along outer circumferential surface 10 of the first layer 1 of the embodiment in figure 13c is provided with a hole which allows the conducting material 16 to protrude to the outer circumferential surface 10of the first layer 1. In this embodiment in order to allow the flow of charge between the conducting material 16 and the ground a direct connexion between the conducting material 16 and the ground is provided through the hole.

Figure 14d shows the embodiment of figure 14c in a circumferential view comprising first and second layers.

Figure 15a shows a twenty second embodiment of the invention in a radial view wherein the conducting material 16 is applied solely along the tire sidewall 21, throughout the first layer 1, on both tire sidewalls 21 in an opposed configuration.

Figure 15b shows a twenty third embodiment of the invention in a radial view wherein the conducting material 16 is applied solely along the tire sidewall 21, throughout the first layer, on both the tire sidewalls 21 in an interdigited configuration.

Figure 15c shows an twenty fourth embodiment of the invention in a radial view wherein the conducting material 16 is applied as in figure 15a, in an opposed configuration and merely in the axial direction.

Figure 15d shows the embodiment of figure 15c in a circumferential view comprising first and second layers.

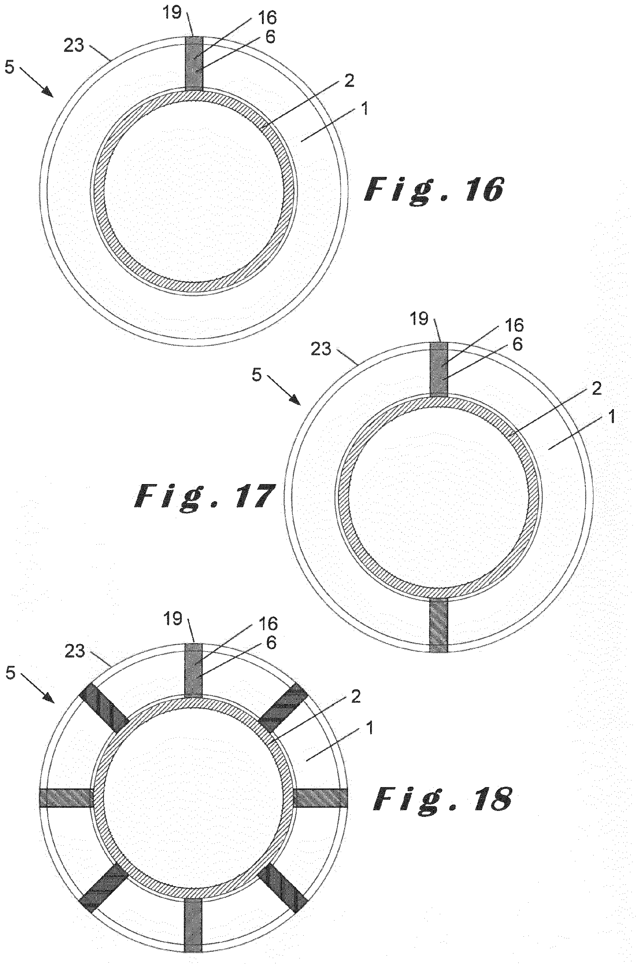

Figures 16 to 18 show an axial view of the first layer 1 and second layer 2 of the tire 5. The first layer 1 may contain one single path 6 such as shown in figure 16 or a plurality of such paths 6, such as shown in figures 17 and 18, filled with conducting material 16, if it is desired to increase the ability of the tire 5 to discharge unwanted electrical charges to the ground. The first layer may for example be provided with one, two, eight or more paths 6. Although their mutual position is not critical for the invention, the position of the respective ground contacting surfaces 19 is preferably symmetric with respect to each other and to the tread surface 23 of the tire 5 to allow unwanted electrical charges to be discharged at regular intervals and to increase the homogeneity of the tire 5. This way homogeneous wearing of the tread surface 23 may be achieved, and the homogeneity of the mechanical properties of the tire 5 is improved. Figure 17 shows such an embodiment comprising two paths 6, whereas figure 18 shows an exemplary embodiment with eight paths 6 disposed in an interdigited fashion. In order to improve discharge of unwanted electric charges to the ground without significantly increasing the risk that unwanted tire marks are left on the floor, the total surface area of the ground contacting surfaces 19 of paths 6 preferably is less than 1% of the total area of the tread surface 23. More preferably, the total area of the ground contacting surfaces 19 is less than 0.1% of the total area of the tread surface 23 of the tire 5.

## Claims

1. A non-marking anti-static solid rubber tire for a vehicle wheel (4) comprising electrically conducting means (15) such as a rim, the tire (5) comprising a tread surface (23) delimited by two opposing tire sidewalls (21), the tire (5) comprising a first cylindrical layer (1) provided for contacting the ground, the first layer being of a first material, and comprising a first outer circumferential surface (10) and a first inner circumferential surface (11), the first inner and first outer circumferential surface (10, 11) being interconnected by opposing first layer sidewalls (20) and together delimiting the first layer (1), wherein the first material is a non-conducting and non-marking rubber material, wherein the tire comprises at least one further cylindrical layer comprising an outer circumferential surface and an inner circumferential surface, the inner circumferential surface being arranged to contact the electrically conducting means (15) of the wheel, and wherein the tire (5) further comprises a rubber conducting material (16) having an electrical resistance which is smaller than the electrical resistance of the first material, wherein the conducting material (16) extends from the first outer circumferential surface at least up to the first inner circumferential surface so that the conducting material (16) is electrically connected to the layer having the inner circumferential surface arranged to contact the electrically conducting means (15) of the wheel, and wherein the material of the layer having the inner circumferential surface arranged to contact the electrically conducting means (15) of the wheel is sufficiently electrically conducting to conduct electric charges from the electrically conducting means towards the ground, and **characterized in that** the conducting material (16) is applied along at least one of the tire sidewalls (21).

2. The tire according to the preceding claim, wherein the conducting material (16) is partly enveloped by the first material (1).

3. The tire according to anyone of the preceding claims, wherein the conducting material (16) fills at least one path (6) which extends at least from the first inner circumferential surface (11) of the first layer (1) through the first layer (1) up to the first outer circumferential surface (10) of the first layer (1).

4. The tire according to the preceding claim, wherein the path (6) extends linearly from the inner circumferential surface (11) up to the outer circumferential surface (10).

5. The tire according to the claims 3 or 4, wherein the path (6) extends radially from the inner circumferential surface (11) up to the outer circumferential surface (10).

6. The tire according to anyone of the claims 3 to 5, wherein the path (6) is cylindrically shaped.

7. The tire according to anyone of the claims 3 to 6, wherein at least two paths (6) are present along the tire's circumference.

8. The tire according to the preceding claim, wherein the paths (6) are evenly distributed along the circumference of the tire.

9. The tire according to anyone of the claims 3 to 8, wherein the paths (6) of one of the sides of axial symmetry of the tire oppose the paths of the other side of axial symmetry of the tire.

10. The tire according to anyone of the claims 3 to 8, wherein the paths (6) of one of the sides of axial symmetry of the tire and the paths of the other side of axial symmetry of the tire are interdigitated along the opposing tire sidewalls (21).

11. The tire according to anyone of the preceding claims, wherein the conducting materials (16) have a total ground contacting surface (19) area of at least 150 mm².

12. The tire according to any one of the preceding claims wherein the conducting material (16) extends from the first outer circumferential surface at least up to the outer circumferential surface of the layer having the inner circumferential surface arranged to contact the electrically conducting means (15) of the wheel.

13. The tire according to any one of the preceding claims 1-11 wherein the conducting material (16) extends from the first outer circumferential surface at least up to the outer circumferential surface of a further electrically conductive cylindrical layer which is in electrical contact with the layer having the inner circumferential surface arranged to contact the electrically conducting means (15) of the wheel.

14. The tire according to any one of the preceding claims wherein the layer having the inner circumferential surface arranged to contact the electrically conducting means (15) of the wheel, is a cylindrical metal plate.

15. Vehicle wheel (4) comprising a tire according to anyone of the preceding claims and conducting means (15), for example a rim (8), the conducting material (16) of the tire being electrically connected to the electrically conducting means (15) of the wheel (4).

## Patentansprüche

1. Ein nicht markierender antistatischer Vollgummireifen für ein Fahrzeugrad (4), welcher elektrisch leitende Mittel (15) wie eine Felge umfasst, wobei der Reifen (5) eine Lauffläche (23) umfasst, begrenzt durch zwei gegenüberliegende Reifenseitenwände (21), wobei der Reifen (5) eine erste zylindrische Schicht (1) umfasst, bereitgestellt, um Kontakt mit dem Boden zu haben, wobei die erste Schicht aus einem ersten Material ist, und eine erste äußere umlaufende Oberfläche (10) und eine erste innere umlaufende Oberfläche (11) umfasst, wobei die erste innere und die erste äußere umlaufende Oberfläche (10, 11) durch gegenüberliegende erste Schichtseitenwände (20) miteinander verbunden sind und gemeinsam die erste Schicht (1) begrenzen, wobei das erste Material ein nicht leitendes und nicht markierendes Gummimaterial ist, wobei der Reifen zumindest eine weitere zylindrische Schicht umfasst, welche eine äußere umlaufende Oberfläche und eine innere umlaufende Oberfläche umfasst, wobei die innere umlaufende Oberfläche angeordnet ist, um Kontakt mit den elektrisch leitenden Mitteln (15) des Rads zu haben, und wobei der Reifen (5) ferner ein leitendes Gummimaterial (16) umfasst, das einen elektrischen Widerstand hat, der geringer ist als der elektrische Widerstand des ersten Materials, wobei sich das leitende Material (16) von der ersten äußeren umlaufenden Oberfläche zumindest bis zur ersten inneren umlaufenden Oberfläche hinauf erstreckt, sodass das leitende Material (16) elektrisch mit der Schicht mit der inneren umlaufenden Oberfläche verbunden ist, die angeordnet ist, um Kontakt mit den elektrisch leitenden Mitteln (15) des Rads zu haben, und wobei das Material der Schicht mit der inneren umlaufenden Oberfläche, die angeordnet ist, um Kontakt mit den elektrisch leitenden Mitteln (15) des Rads zu haben, ausreichend elektrisch leitend ist, um elektrische Ladungen von den elektrisch leitenden Mitteln zum Boden zu leiten, und **dadurch gekennzeichnet, dass** das leitende Material (16) entlang mindestens einer der Reifenseitenwände (21) angebracht ist.

2. Der Reifen nach dem vorigen Anspruch, wobei das leitende Material (16) teilweise durch das erste Material (1) umhüllt ist.

3. Der Reifen nach irgendeinem der vorigen Ansprüche, wobei das leitende Material (16) zumindest eine Leiterbahn (6) füllt, die sich zumindest von der ersten inneren umlaufenden Oberfläche (11) der ersten Schicht (1) durch die erste Schicht (1) bis zur ersten äußeren umlaufenden Oberfläche (10) der ersten Schicht (1) hinauf ausdehnt.

4. Der Reifen nach dem vorigen Anspruch, wobei sich die Leiterbahn (6) linear von der inneren umlaufenden Oberfläche (11) bis zur äußeren umlaufenden Oberfläche (10) hinauf ausdehnt.

5. Der Reifen nach den Ansprüchen 3 oder 4, wobei sich die Leiterbahn (6) radial von der inneren umlaufenden Oberfläche (11) bis zur äußeren umlaufenden Oberfläche (10) hinauf ausdehnt.

6. Der Reifen nach irgendeinem der Ansprüche 3 bis 5, wobei die Leiterbahn (6) zylindrisch geformt ist.

7. Der Reifen nach irgendeinem der Ansprüche 3 bis 6, wobei mindestens zwei Leiterbahnen (6) entlang des Umfangs des Reifens vorhanden sind.

8. Der Reifen nach dem vorigen Anspruch, wobei die Leiterbahnen (6) gleichmäßig entlang des Umfangs des Reifens verteilt sind.

9. Der Reifen nach irgendeinem der Ansprüche 3 bis 8, wobei die Leiterbahnen (6) einer der Seiten axialer Symmetrie des Reifens gegenüber den Leiterbahnen der anderen Seiten axialer Symmetrie des Reifens liegen.

10. Der Reifen nach irgendeinem der Ansprüche 3 bis 8, wobei die Leiterbahnen (6) einer der Seiten axialer Symmetrie des Reifens und die Leiterbahnen der anderen Seiten axialer Symmetrie des Reifens ineinander verflochten entlang der gegenüberliegenden Reifenseitenwände (21) liegen.

11. Der Reifen nach irgendeinem der vorigen Ansprüche, wobei die leitenden Materialien (16) eine gesamte Bodenkontaktfläche (19) von mindestens 150 mm² haben.

12. Der Reifen nach irgendeinem der vorigen Ansprüche, wobei sich das leitende Material (16) von der ersten äußeren umlaufenden Oberfläche bis zumindest zur äußeren umlaufenden Oberfläche der Schicht mit der inneren umlaufenden Oberfläche hinauf ausdehnt, die angeordnet ist, um Kontakt mit den elektrisch leitenden Mitteln (15) des Rads zu haben.

13. Der Reifen nach irgendeinem der vorigen Ansprüche 1 bis 11, wobei sich das leitende Material (16) von der ersten äußeren umlaufenden Oberfläche bis zumindest zur äußeren umlaufenden Oberfläche einer weiteren elektrisch leitenden zylindrischen Schicht hinauf ausdehnt, die mit der Schicht mit der inneren umlaufenden Oberfläche in Kontakt ist, die angeordnet ist, um Kontakt mit den elektrisch leitenden Mitteln (15) des Rads zu haben.

14. Der Reifen nach irgendeinem der vorigen Ansprüche, wobei die Schicht mit der inneren umlaufenden Oberfläche, die angeordnet ist, um Kontakt mit den elektrisch leitenden Mitteln (15) des Rads zu haben, eine zylindrische Metallplatte ist.

15. Fahrzeugrad (4), welches einen Reifen nach irgendeinem der vorigen Ansprüche und leitende Mittel (15), zum Beispiel eine Felge (8), umfasst, wobei das leitende Material (16) des Reifens elektrisch mit den elektrisch leitenden Mitteln (15) des Rads (4) verbunden ist.

## Revendications

1. Pneu en caoutchouc solide antistatique non marquant pour une roue de véhicule (4) comprenant des moyens électroconducteurs (15) tels qu'une jante, le pneu (5) comprenant une surface de bande de roulement (23) délimitée par deux flancs de pneu opposés (21), le pneu (5) comprenant une première couche cylindrique (1) destinée à venir en contact avec le sol, la première couche étant constituée d'un premier matériau, et comprenant une première surface circonférentielle extérieure (10) et une première surface circonférentielle intérieure (11), les premières surfaces circonférentielles intérieure et extérieure (10, 11) étant interconnectées par des flancs de première couche opposés (20) et délimitant ensemble la première couche (1), dans lequel le premier matériau est un matériau de caoutchouc non conducteur et non marquant, dans lequel le pneu comprend au moins une couche cylindrique supplémentaire comprenant une surface circonférentielle extérieure et une surface circonférentielle intérieure, la surface circonférentielle intérieure étant agencée pour venir en contact avec les moyens électroconducteurs (15) de la roue, et dans lequel le pneu (5) comprend en outre un matériau conducteur de caoutchouc (16) présentant une résistance électrique qui est inférieure à la résistance électrique du premier matériau, dans lequel le matériau conducteur (16) s'étend de la première surface circonférentielle extérieure au moins jusqu'à la première surface circonférentielle intérieure de sorte que le matériau conducteur (16) soit connecté électriquement à la couche présentant la surface circonférentielle intérieure agencée pour venir en contact avec les moyens électroconducteurs (15) de la roue, et dans lequel le matériau de la couche présentant la surface circonférentielle intérieure agencée pour venir en contact avec les moyens électroconducteurs (15) de la roue est suffisamment électroconducteur pour conduire des charges électriques des moyens électroconducteurs vers le sol, et **caractérisé en ce que** le matériau conducteur (16) est appliqué le long d'au moins l'un des flancs de pneu (21).

2. Pneu selon la revendication précédente, dans lequel le matériau conducteur (16) est partiellement enveloppé par le premier matériau (1).

3. Pneu selon l'une quelconque des revendications précédentes, dans lequel le matériau conducteur (16) remplit au moins un trajet (6) qui s'étend au moins de la première surface circonférentielle intérieure (11) de la première couche (1) à travers la première couche (1) jusqu'à la première surface circonférentielle extérieure (10) de la première couche (1).

4. Pneu selon la revendication précédente, dans lequel le trajet (6) s'étend linéairement de la surface circonférentielle intérieure (11) jusqu'à la surface circonférentielle extérieure (10).

5. Pneu selon la revendication 3 ou 4, dans lequel le trajet (6) s'étend radialement de la surface circonférentielle intérieure (11) jusqu'à la surface circonférentielle extérieure (10).

6. Pneu selon l'une quelconque des revendications 3 à 5, dans lequel le trajet (6) est de forme cylindrique.

7. Pneu selon l'une quelconque des revendications 3 à 6, dans lequel au moins deux trajets (6) sont présents le long de la circonférence du pneu.

8. Pneu selon la revendication précédente, dans lequel les trajets (6) sont répartis uniformément le long de la circonférence du pneu.

9. Pneu selon l'une quelconque des revendications 3 à 8, dans lequel les trajets (6) d'un des côtés de symétrie axiale du pneu s'opposent aux trajets de l'autre côté de symétrie axiale du pneu.

10. Pneu selon l'une quelconque des revendications 3 à 8, dans lequel les trajets (6) d'un des côtés de symétrie axiale du pneu et les trajets de l'autre côté de symétrie axiale du pneu sont interdigités le long des flancs de pneu opposés (21).

11. Pneu selon l'une quelconque des revendications précédentes, dans lequel les matériaux conducteurs (16) présentent une surface totale de contact avec le sol (19) d'au moins 150 mm².

12. Pneu selon l'une quelconque des revendications précédentes, dans lequel le matériau conducteur (16) s'étend de la première surface circonférentielle extérieure au moins jusqu'à la surface circonférentielle extérieure de la couche présentant la surface circonférentielle intérieure agencée pour venir en contact avec les moyens électroconducteurs (15) de la roue.

13. Pneu selon l'une quelconque des revendications précédentes 1-11, dans lequel le matériau conducteur (16) s'étend de la première surface circonférentielle extérieure au moins jusqu'à la surface circonférentielle extérieure d'une couche cylindrique électroconductrice supplémentaire qui est en contact électrique avec la couche présentant la surface circonférentielle intérieure agencée pour venir en contact avec les moyens électroconducteurs (15) de la roue.

14. Pneu selon l'une quelconque des revendications précédentes, dans lequel la couche présentant la surface circonférentielle intérieure agencée pour venir en contact avec les moyens électroconducteurs (15) de la roue est une plaque métallique cylindrique.

15. Roue de véhicule (4) comprenant un pneu selon l'une quelconque des revendications précédentes et des moyens conducteurs (15), par exemple une jante (8), le matériau conducteur (16) du pneu étant connecté électriquement aux moyens électroconducteurs (15) de la roue (4).
